Europäisches Patentamt

European Patent Office

Office européen des brevets

(11) Publication number: **0 086 098**
**A1**

## (12) EUROPEAN PATENT APPLICATION

(21) Application number: **83300577.0**

(22) Date of filing: **04.02.83**

(51) Int. Cl.³: **B 65 B 3/36**
**G 01 N 1/18**

(30) Priority: **08.02.82 US 346699**

(43) Date of publication of application:
**17.08.83 Bulletin 83/33**

(84) Designated Contracting States:
**CH DE FR GB IT LI NL**

(71) Applicant: **MERCK & CO. INC.**
**126, East Lincoln Avenue P.O. Box 2000**
**Rahway New Jersey 07065(US)**

(72) Inventor: **Giacobbe, Robert A.**
**230 Westmount Avenue**
**Lavallette New Jersey 08735(US)**

(74) Representative: **Purvis, William Michael**
**Cameron et al,**
**D. Young & Co. 10 Staple Inn**
**London WC1V 7RD(GB)**

(54) Multiple unit filling system for liquid media.

(57) A multiple unit liquid filling system for dispensing liquid, particularly liquid containing solids and insolubles, from a bulk liquid container (24) comprises a centrifugal pump (2), a manifold (5) and a plurality of solenoid valves (9) which are provided one in each of a plurality of outlet pipes (8) from the manifold (5) and which are controlled by a timer (13). A pressure regulating valve (6) keeps the system under pressure and allows batch filling of a plurality of containers (11) at controlled intervals.

EP 0 086 098 A1

./...

Croydon Printing Company Ltd.

Fig. 1.

1

## MULTIPLE UNIT FILLING SYSTEM FOR LIQUID MEDIA

This invention relates to a multiple unit filling system for liquid media.

Such a filling system may for example be required for filling flasks and test tubes, particularly in a microbiological laboratory where a large number of culture containing flasks may be needed for a particular experiment or fermentation. Such systems have been previously proposed, for example that sold under the Trade Mark Filamatic. This is liquid filling and packaging equipment but is of the piston kind connected to a pump which fills one or two containers at a time. The fact that it is a piston system used to fill containers from a main reservoir means that it cannot handle insoluble suspended material which may be in the liquid being dispensed because the insoluble suspensions would clog the piston.

According to the invention there is provided liquid filling apparatus for filling a plurality of containers simultaneously and each with the same volume of liquid, characterised in that the apparatus comprises:

a bulk liquid container for liquid to be filled into the plurality of containers;

a pump;

a manifold;

a duct leading from the bulk liquid container to the pump, from the pump to the manifold and from the manifold back to the bulk liquid container;

a plurality of outlets from the manifold;

a respective solenoid valve on each outlet;

a pressure regulating valve at the downstream end of the manifold to maintain the liquid in the manifold at positive pressure; and

a timer electrically connected to the solenoid valves for regulating cycle time and interval time thereof.

Such apparatus can have the advantage that a plurality of fills per cycle of the system can be accomplished with more uniform dispersement of liquid media into the containers which results in a uniform volume in each container.

Such apparatus need not be susceptible to clogging of insoluble material and can handle a wide range of viscosities of liquid. Settling of suspended or insoluble particles can be avoided.

The apparatus can deliver an accurate measure of liquid and can maintain and hold an accurate volume of liquid which is then dispensed into the multiplicity of containers as the liquid in the bulk liquid container decreases in volume.

The apparatus can increase the efficiency of media preparation if used in a laboratory by filling more than one container per cycle of the apparatus and can reduce man hours spent filling liquid, increase accuracy, increase control and maintain uniform suspension of mediums being produced.

The invention is diagrammatically illustrated by way of example in the accompanying drawings, in which:-

Figure 1 which is a diagram of liquid filling apparatus according to the invention; and

Figure 2 is a view of a plate or board having means for holding containers to be filled by the apparatus of Figure 1.

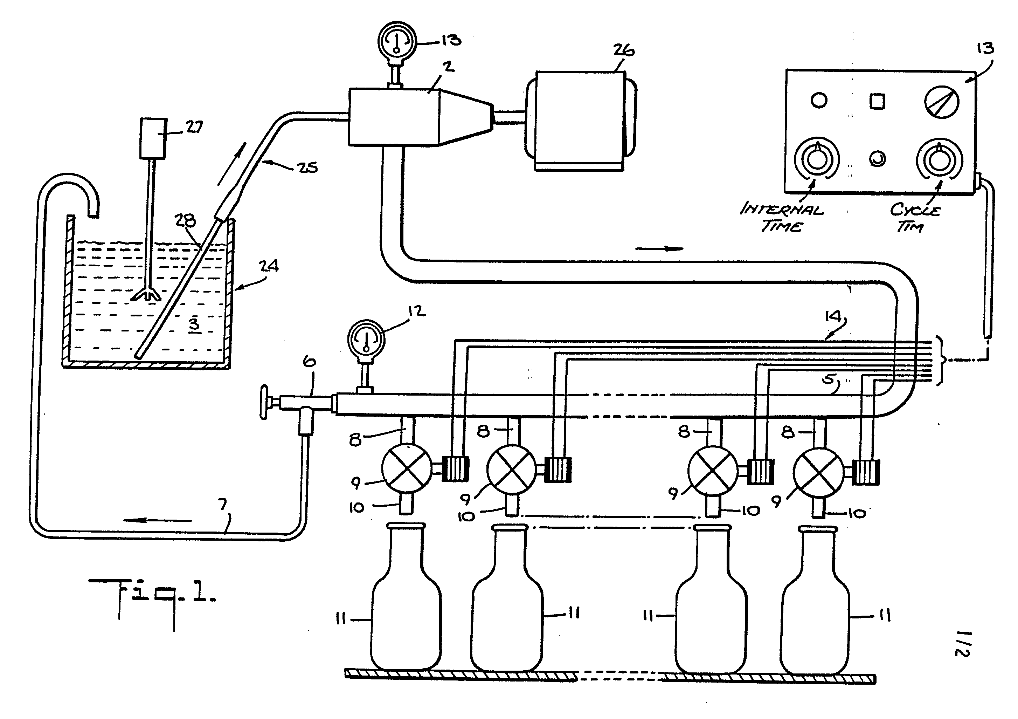

Referring to Figure 1, a centrifugal pump 2 driven by a motor 26 pumps liquid 3 from a bulk liquid container 24 through tubing. The liquid 3 flows through tubing 25 (for example flexible plastics tubing) to the pump 2 and then into a manifold 5. A metal tube 28 or other stiffening material can be used as part of the tubing which is inserted into the container 24 to make sure liquid 3 flows through the system at all times and that the flexible tubing 25 does not accidentally fall out of the container 24. At the downstream end of the manifold 5 is a pressure regulating valve 6 and the liquid then passes through further tubing 7 back to the container 24. To the manifold 5 are connected outlet pipes 8 having solenoid valves 9 therein the free end 10 of each outlet pipe being led to a respective one of a plurality of containers such as for example flasks 11. Figure 1 shows four outlet pipes 8, solenoid valves 9, free ends 10 and flasks 11, but obviously a greater or lesser number could be provided as desired. It has been found that ten or even twenty five individual filling stations can be provided along the manifold 5. The limiting factor will be the pressure which can be maintained along the manifold 5 so that the flasks 11 can be filled with an equal volume of liquid 3.

Pressure gauges 12 and 13 can be provided. The pressure gauge 12 is located at the downstream end of the manifold 5 between the last filling station and the pressure regulating valve 6 and the pressure gauge 13 is located at the site of the centrifugal pump 2 to indicate the pressure at the entry end of the manifold 5.

Connected to each solenoid valve 9 by electrical connections 14 is a timer 13. The timer 13 is preferably a commercially available timer having several cycle timing switches to time a cycle time and an interval time. Such a timer can be accurate to 1/10 of a second and a typical timer which can be used is manufactured by Texas Instruments, model 510 (red pack unit). the timer 13 is connected to the solenoid valves 9 in such a manner that a timer cycle is employed, the cycle time determining how long the solenoid valves 9 stay open and thus how much liquid flows into each flask 11, the longer its cycle time the greater the volume of liquid flowing into each flask 11. In a typical example, a cycle time of five seconds will cause about 55 millilitres of liquid to flow into each flask 11. The interval time of the timer determines how much time elapses between the filling of each batch of flasks 11.

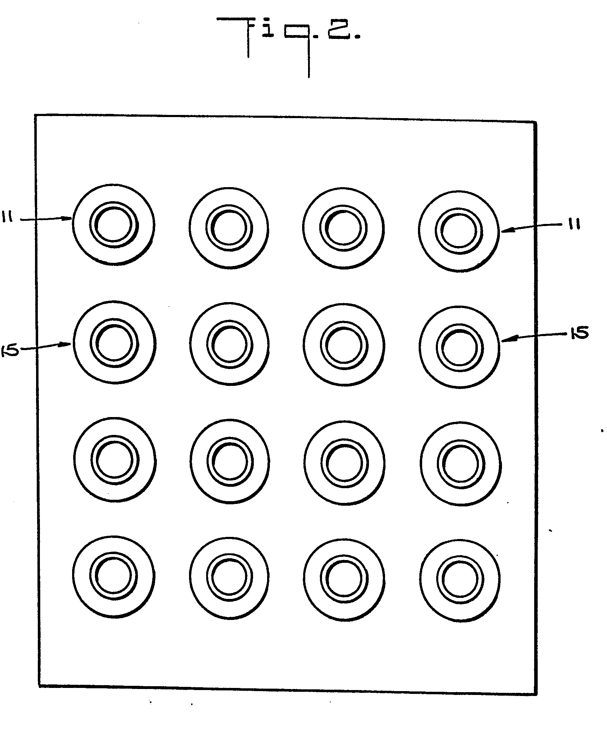

Figure 2 shows a plate or board which can hold four flasks in each of four rows of flasks but there may be more or less rows and more or less flasks per row as desired, particularly ten or even twenty five containers per row.

Thus, for example, as one row of four flasks 11 on the plate is filled with liquid for example during a five second interval of the cycle time, an interval time of say five to ten seconds will enable an operator or an automatic machine to advance the plate so that another row of containers 15 on the plate can be placed under the ends 10 of the outlet pipes 8. In this manner an operator can fill the sixteen flasks shown in Figure 2 uniformly with an equal volume of liquid in a matter of fifty seconds for example.

The solenoid valves 9 can be commercially available solenoid valves such as, for example, Valcor Manufacturing Co. Solenoid valve number 11P19C4-5. These valves are normally opened, normally closed in-out solenoid valves. The valves are preferably stainless steel to avoid corrosion particularly when a corrosive liquid 3 is being filled into the flasks 11.

It is important that the liquid in the manifold 5 be kept under a constant pressure by means of the pressure regulating valve 6 located at the downstream end of the manifold 5. Thus a pressure is needed in the manifold 5 such that the liquid 3 will simultaneously and uniformly fill all the flasks 11 at the same time and to the same volume. the pressure in the manifold 5 must be balanced so that the pressure is uniform and so that as explained above an equal volume of liquid enters each flask 11 through the respective solenoid valve 9 during the time that the solenoid valve 9 stays open. A typical pressure in the manifold 5 is 100 lbs. per square inch pressure which results in a pressure of about 50 lbs. per square inch at each solenoid valve.

It is also important that there is liquid in the manifold 5 and the tubing 7 at all times. A cycling back of the liquid 3 through the tubing 7 and back into the bulk liquid container 24 is important since the constant recycling of liquid prevents settling of suspended or insoluble material, keeps a uniform flow of liquid and a constant volume maintained throughout and aids in even dispensing of liquid to the flasks 11 through the four solenoid valves 9 shown in Figure 1. A stirrer 27 can be provided to keep the liquid 3 in the container 24 well stirred and uniform particularly if the liquid 3 has suspended or insoluble material therein. As can be seen, each one of the four solenoid valves 9 shown in Figure 1, is used as a separate filling head in order to distribute the liquid uniformly into the flasks 11. all four solenoid valves shown are connected to the manifold 5 through a respective one of the outlet pipes 8 and are controlled by the single control timer unit 13. As explained previously the control timer unit 13 controls the solenoids 9 in two ways, namely, interval time between fills and time allocated for liquid to be dispensed.

## CLAIMS

1. Liquid filling apparatus for filling a plurality of containers simultaneously and each with the same volume of liquid, characterised in that the apparatus comprises:
a bulk liquid container (24) for liquid (3) to be filled into the plurality of containers (11);
a pump (2);
a manifold (5);
a duct (28, 25, 7) leading from the bulk liquid container (24) to the pump (2), from the pump (2) to the manifold (5) and from the manifold (5) back to the bulk liquid container (24);
a plurality of outlets (8) from the manifold;
a respective solenoid valve (9) on each outlet (8);
a pressure regulating valve (12) at the downstream end of the manifold (5) to maintain the liquid (3) in the manifold (5) at positive pressure; and
a timer (13) electrically connected to the solenoid valves (9) for regulating cycle time and interval time thereof.

2. Liquid filling apparatus according to claim 1, characterised by a pressure gauge to indicate the pressure in the manifold (5).

3. Liquid filling apparatus according to claim 1 or claim 2, characterised in that the duct (28, 25, 7) is formed by tubing.

4. A method of filling liquid into a plurality of containers, characterised by the steps of locating a plurality of open containers in a row so that each open container has its open end under a respective one of the outlets of apparatus according to claim 1 and operating said apparatus so that a quantity of liquid is filled into each open container during a solenoid valve open time as measured by the timer.

5. A method according to claim 4, characterised by moving said open containers in a row, after they have been filled with liquid and locating a second row of open containers under the outlets during the interval time as measured by the timer.

0086098

6.     A method according to claim 4 or claim 5, characterised in that a pressure of approximately 100 lbs. per square inch is maintained in the manifold.

7.     A method according to any one of claims 4 to 6, characterised in that the liquid is one containing solids or insolubles.

Fig. 1.

2/2

Fig. 2.

**European Patent Office**

## EUROPEAN SEARCH REPORT

Application number

EP 83 30 0577

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 124 045 (M.SLYWKA) *Column 2, lines 18-58; column 4, line 59 to column 5, line 11; figure 1* | 1,3,6 | B 65 B 3/36 G 01 N 1/18 |
| Y | US-A-3 866 635 (L.N.PEARCE) *Column 2, lines 1-41; figure 1* | 1,3 | |
| A | DE-A-2 528 975 (UNIONPACK ABFULL -UND VERPACKUNGSBETRIEBE Dr. GUNDERMANN KG) *Page 11, lines 6-24; page 12, lines 6-12; figure 1* | 4,5 | |
| A | US-A-3 683 977 (J.A.CROWE et al.) *Column 2, lines 56-68; figure 1* | 4,5 | |

**TECHNICAL FIELDS SEARCHED (Int. Cl. 3)**

| Category | Citation of document with indication, where appropriate, of relevant passages | Relevant to claim | |
|---|---|---|---|
| A | FR-A-2 341 136 (ERCA) *Page 5, line 10 to page 7, line 18; figure 1* | 2 | B 65 B 3/00 B 67 C 3/00 G 01 F 13/00 G 01 N 1/00 B 01 L 11/00 |

The present search report has been drawn up for all claims

| Place of search | Date of completion of the search | Examiner |
|---|---|---|
| THE HAGUE | 04-05-1983 | ANTHONY R.G. |